# EUROPEAN PATENT SPECIFICATION

(11) **EP 2 874 303 B1**
(45) Date of publication and mention of the grant of the patent: **02.01.2019**
(21) Application number: 13193014.1
(22) Date of filing: 15.11.2013
(51) Int. Cl.: H02M 7/537, H02M 7/487

(54) **DC/AC inverter**
Gleichstrom-Wechselstromwandler
Onduleur DC-AC

(43) Date of publication of application: 20.05.2015
(73) Proprietor: Mitsubishi Electric R & D Centre Europe B.V., 1119 NS Schiphol Rijk (NL); Mitsubishi Electric Corporation, Chiyoda-ku Tokyo 100-8310 (JP)
(72) Inventor: Lefevre, Guillaume, 35708 RENNES Cedex 7 (FR); Ewanchuk, Jeffrey, 35708 RENNES Cedex 7 (FR); Foube, Laurent, 35708 RENNES Cedex 7 (FR)
(74) Representative: Cabinet Le Guen Maillet

(56) References cited:
- WO-A1-2008/154918
- DE-A1-102007 028 078
- DE-A1-102012 203 836
- US-A1- 2009 003 024
- US-A1- 2013 099 571
- ANNETTE VON JOUANNE ET AL: "A Multilevel Inverter Approach Providing DC-Link Balancing, Ride-Through Enhancement, and Common-Mode Voltage Elimination", IEEE TRANSACTIONS ON INDUSTRIAL ELECTRONICS, IEEE SERVICE CENTER, PISCATAWAY, NJ, USA, vol. 49, no. 4, 1 August 2002 (2002-08-01) , XP011073754, ISSN: 0278-0046

## Description

The present invention relates generally to a DC-AC inverter.

A photovoltaic cell directly converts solar energy into electrical energy. The electrical energy produced by the photovoltaic cell can be extracted over time and used in the form of electric power. The direct electric power from the photovoltaic cell is provided to conversion devices like DC-DC converter circuits and DC/AC inverter circuits which maintain a desired output voltage.

Many aspects have to be taken into account when considering a photovoltaic DC/AC transformerless inverter. The most relevant are efficiency and leakage current.

The patent application DE 10 2012 203836 discloses a circuitry and method for converting and adjusting a DC voltage, photovoltaic system.

The paper of Annette von Jouanne entitled "a multilevel inverter approach providing DC-link balancing, ride through enhancement, and common mode voltage elimination" published in IEEE transactions on industrial electronics, piscatawat, NJ, USA vol 49 no 4 published on August 1, 2002 discloses a three level DC-AC inverter.

In order to harvest a maximum amount of energy, losses in converters must be minimized as much as possible. Because photovoltaic panels are not grounded, a high parasitic capacitance exists between photovoltaic panels terminals and the ground. To avoid a high leakage current flowing through ground parasitic capacitors as well as in the power topology, the voltages between photovoltaic panels terminals and the ground can only fluctuate in a reasonable range.

The present invention aims to provide a new structure of DC/AC inverter which limits the leakage current flowing through ground parasitic capacitors.

To that end, the present invention concerns a DC/AC inverter comprising a first and a second switches, characterized in that one terminal of each switch being connected to a respective input of the DC/AC inverter, the other terminals of the switches being connected together and to one terminal of a third switch, the third switch being a bidirectional switch, the other terminal of the third switch being connected to a first and a second capacitors, one terminal of each capacitor being connected to a respective input of the DC/AC inverter, the other terminals of the capacitors being connected together, the bidirectional switch being conducting and the first and second switches being not conducting during a first time period, the first switch being conducting and the second switch, the bidirectional switch being not conducting during a second time period, the bidirectional switch being conducting and the first and second switches being not conducting during a third time period, the second switch being conducting and the first switch, the bidirectional switch being not conducting during a fourth time period wherein the DC/AC converter comprises means for setting the voltage of the second capacitor to at least one given value prior the end of each time period.

Thus, the leakage current flowing through ground parasitic capacitors is limited.

According to a particular feature, the given value is equal to null value prior to the end of the first and second time periods.

Thus, the voltage between one input of the DC/AC inverter and the ground is continuous during transitions from the first to the second time periods and from the second to the third time periods and then the leakage current flowing through ground parasitic capacitors is limited.

According to a particular feature, the given value is equal to a voltage at the input of the DC/AC inverter prior to the end of the third and fourth time periods.

Thus, the voltage between the other input of the DC/AC inverter and the ground is continuous during transitions from the third to the fourth time periods and from the third to the first time periods and then the leakage current flowing through ground parasitic capacitors is limited.

According to a particular feature, the means for setting the voltage of the second capacitor to at least one given value prior to the end of each time period is a DC/DC converter.

Thus, the control of the voltage of the second capacitor is simple to implement.

According to a particular feature, the DC/DC converter is a bidirectional buck converter composed of a first inductor and a fourth and fifth switches, one terminal of each fourth and fifth switches being connected to a respective input of the DC/AC inverter, the other terminals of the fourth and fifth switches being connected together and to one terminal of the first inductor, the other terminal of the first inductor being connected to the terminals of the capacitors which are connected together.

Thus, the DC/DC converter can control the capacitor voltage by applying an adequate duty cycle.

According to a particular feature, the DC/AC further comprises a sixth and a seventh switches, one terminal of each sixth and seventh switch being connected to a respective input of the DC/AC inverter, the other terminals of the sixth and seventh switches being connected together and to one terminal of a second inductor, the other terminal of the second inductor being connected to a first output of the DC/AC inverter and the second output of the DC/AC inverter is connected to the terminals of the first and second switches which are connected together.

Thus, the present invention is easy to implement and provides good results.

According to a particular feature, the first and third time periods have the same duration.

Thus, the present invention is easy to implement and provides good results.

According to a particular feature, the second and fourth time periods have the same duration.

Thus, the present invention is simple to implement and provides good results.

According to a particular feature, the sum of the durations of the first and third time periods is equal to the duration of the second time period.

Thus, the present invention is easy to implement and provides good results.

According to a particular feature, the bidirectional switch is composed of a eighth and a ninth switches, one terminal of the eighth switch being connected to the other terminals of the first and second switches, one other terminal of the eighth switch being connected to a terminal of the ninth switch, the other terminal of the ninth switch being connected to the first and the second capacitors.

Thus, the present invention is easy to implement and provides good results.

According to a particular feature, the bidirectional switch is composed of a eighth switch and four diodes, the anode of a first diode being connected to the first and the second capacitors, the cathode of the first diode being connected to the cathode of a second diode and to a terminal of the eighth switch, the anode of the second diode being connected to the cathode of a third diode and to the terminals of the first and second switches, the anode of the third diode being connected to the other terminal of the eighth switch and to the anode of a fourth diode and the cathode of the fourth diode being connected to the anode of the first diode.

Thus, the present invention is simple to implement and provides good results.

The characteristics of the invention will emerge more clearly from a reading of the following description of an example embodiment, the said description being produced with reference to the accompanying drawings, among which :
Fig. 1 is an example of a photovoltaic system in which the present invention is implemented;
Fig. 2a is an example of a DC/AC inverter topology according to the present invention;
Fig. 2b is an example of a DC/AC inverter topology according to the present invention and in which an example of a DC/DC converter is disclosed;
Fig. 3a is an example of a control of switches of the DC/AC inverter according to the present invention;
Fig. 3b is an example of duty cycle variations of a high frequency switch of the DC/AC inverter for setting the voltage of a capacitor of the DC/AC inverter to at least one given value prior to the end of time periods according to the present invention;
Fig. 4 is an example of the voltage on a capacitor of the DC/AC inverter which is controlled according to the present invention;
Fig. 5 is an example of the output current of the DC/AC inverter according to the present invention;
Fig. 6 represents an example of a device comprising a DC/AC inverter in which the present invention is implemented;
Fig. 7 represents an example of an algorithm executed by the DC/AC inverter in order to control the voltage of a capacitor of the DC/AC inverter;
Fig. 8a is a first example of a bidirectional switch;
Fig. 8b is a second example of a bidirectional switch.

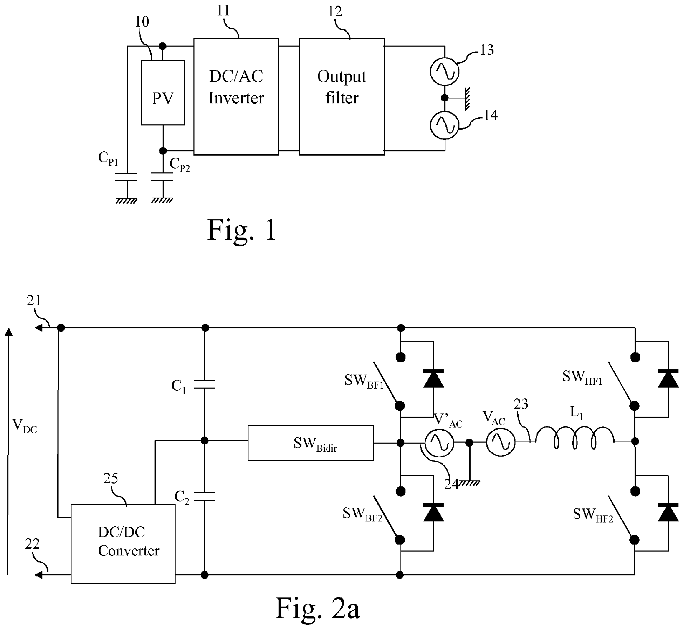

**Fig. 1** is an example of a photovoltaic system in which the present invention may be implemented.

The photovoltaic system is composed of a photovoltaic source 10 which is connected to a DC-AC inverter 11, the output of which is connected to an output filter 12.

The output filter 12 supplies two alternative sources 13 and 14 which may have an opposite phase and which are respectively connected to a ground.

It has to be noted here that two alternative sources 13 and 14 may not have an opposite phase.

Parasitic capacitors C_{P1} and C_{P2} exist between photovoltaic panels terminals and the ground.

**Fig. 2a** is an example of a DC/AC inverter topology according to the present invention.

The DC/AC topology inverter is composed of three stages.

A first stage comprises two switches SW_{HF1} and SW_{HF2}, and an inductor L₁. The switches SW_{HF1} and SW_{HF2} are high frequency switches which can operate at frequencies up to several kHz.

A second stage comprises three switches SW_{BF1}, SW_{BF2}, SW_{Bidir}, The switches SW_{BF1}, SW_{BF2} and SW_{Bidir} are low frequency switches which operate at a frequency at most 10 times lower than the frequency used to control the high frequency switches. For example, the operating frequency of the low frequency switches is 50 or 60Hz or 400Hz.

The switch SW_{Bidir} is a bidirectional switch. In literature, a bidirectional switch is also named bilateral switch or AC-switch or 4Q-switch (Q stands for quadrant). A bidirectional switch has to be able to conduct currents and block voltages of both polarities, depending on control signal.

A third stage comprises a DC/DC converter 25 and two capacitors C₁ and C₂. The DC/DC converter 25 is the mean for setting the voltage of the second capacitor C₂ to at least one given value prior to the end of each time period.

The inputs 21 and 22 of the DC/AC inverter are connected to the terminal of the photovoltaic source 10. The voltage provided by the photovoltaic source 10 is named V_{DC}. The present invention is also applicable with any DC power source. The output 23 of the DC/AC inverter provides a first alternative voltage V_{AC} and the output 23 of the DC/AC inverter provides a second alternative voltage V'_{AC}.

A first input terminal of the DC/DC converter 25 is connected to the input 21.

A second input terminal of the DC/DC converter 25 is connected to the input 22.

A first output terminal of the DC/DC converter is connected to a first terminal of the capacitor C₂ and a second output terminal of the DC/DC converter 25 is connected to a second terminal of the capacitor C₂, to a first terminal of the capacitor C₁ and to a first terminal of the switch SW_{Bidir}.

A second terminal of the switch SW_{Bidir} is connected to a first terminal of the switch SW_{BF1}, to a first terminal of the switch SW_{BF2} and to the output 24.

A second terminal of the switch SW_{BF2} is connected to the input 22.

A second terminal of the switch SW_{BF1} is connected to the input 21.

A second terminal of the capacitor C₁ is connected to the input 21.

A first terminal of the switch SW_{HF2} is connected to the input 21.

A second terminal of the switch SW_{HF2} is connected to a first terminal of the switch SW_{HF1} and to a first terminal of the inductor L₁.

A second terminal of the inductor L₁ is connected to the output 23.

A second terminal of the switch SW_{HF1} is connected to the input 21.

A diode is connected between the terminals of each switches. The diode is for example the body diode of a MOSFET switch or an additional free wheeling diode.

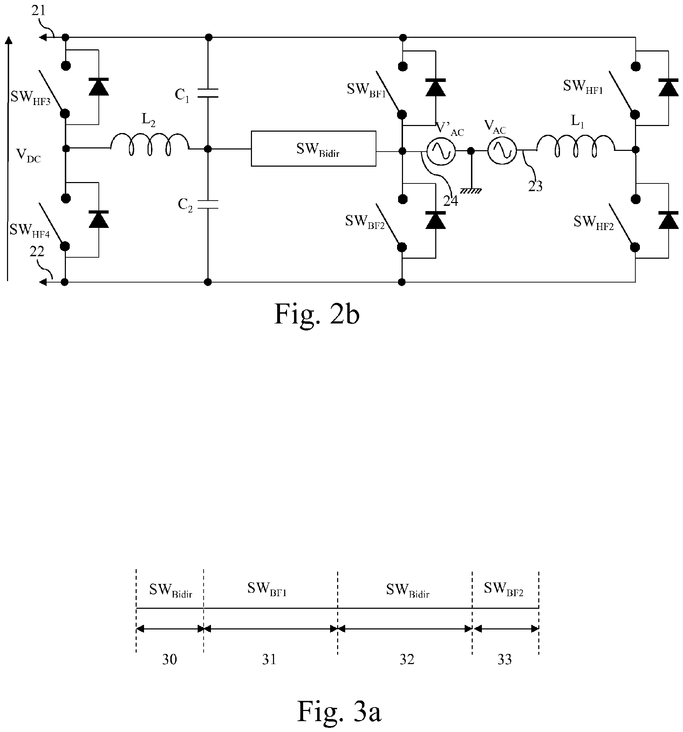

**Fig. 2b** is an example of a DC/AC inverter topology according to the present invention and in which an example of a DC/DC converter is disclosed.

The DC/AC topology inverter is composed of three stages.

A first stage comprises two switches SW_{HF1} and SW_{HF2}, and an inductor L₁. The switches SW_{HF1} and SW_{HF2} are high frequency switches which can operate at frequencies up to several kHz.

A second stage comprises three switches SW_{BF1}, SW_{BF2} and SW_{Bidir}. The switches SW_{BF1}, SW_{BF2} and SW_{Bidir} are low frequency switches which operate at a frequency at most 10 times lower than the frequency used for controlling the high frequency switches. For example, the operating frequency of the low frequency switches is 50 or 60Hz or 400Hz.

The switch SW_{Bidir} is a bidirectional switch.

In literature, a bidirectional switch is also named bilateral switch or AC-switch or 4Q-switch (Q stands for quadrant). A bidirectional switch has to be capable of conducting currents and blocking voltages of both polarities, depending on control signal.

A third stage comprises two switches SW_{HF3} and SW_{HF4}, two capacitors C₁ and C₂ and an inductor L₂. The switches SW_{HF3} and SW_{HF4} are high frequency switches which can operate at frequencies up to several kHz.

The inputs 21 and 22 of the DC/AC inverter are connected to the terminal of the photovoltaic source 10. The voltage provided by the photovoltaic source 10 is named V_{DC}. The present invention is also applicable with any DC power source. The output 23 of the DC/AC inverter provides a first alternative voltage V_{AC} and the output 23 of the DC/AC inverter provides a second alternative voltage V'_{AC}.

A first terminal of the switch SW_{HF3} is connected to the input 21.

A second terminal of the switch SW_{HF3} is connected to a first terminal of the switch SW_{HF4} and to a first terminal of the inductor L₂. A second terminal of the switch SW_{HF4} is connected to the input 22.

A first terminal of the capacitor C₂ is connected to the input 22 and a second terminal of the capacitor C₂ is connected to a second terminal of the inductor L₂, to a first terminal of the capacitor C₁ and to a first terminal of the switch SW_{Bidir}.

A second terminal of the capacitor C₁ is connected to the input 21.

A second terminal of the switch SW_{Bidir} is connected to a first terminal of the switch SW_{BF1}, to a first terminal of the switch SW_{BF2} and to the output 24.

A second terminal of the switch SW_{BF2} is connected to the input 22.

A first terminal of the switch SW_{HF2} is connected to the input 21.

A second terminal of the switch SW_{HF2} is connected to a first terminal of the switch SW_{HF1} and to a first terminal of the inductor L₁.

A second terminal of the inductor L₁ is connected to the output 23.

A second terminal of the switch SW_{HF1} is connected to the input 21.

A diode is connected between the terminals of each switches. The diode is for example the body diode of a MOSFET switch or an additional free wheeling diode.

**Fig. 3a** is an example of a control of switches of the DC/AC inverter according to the present invention.

The Fig. 3a shows a period of the alternative signal provided by the photovoltaic system. The period is divided into time periods noted 30, 31, 32 and 33.

In the time period noted 30, which starts at 0 and ends at kT, where T is the period of the alternative signal provided by the photovoltaic system, the switch SW_{Bidir} is conductive and the switches SW_{BF1} and SW_{BF2} are blocked.

In the time period noted 31, which starts at kT and ends at T/2, the switch SW_{BF1} is conducting and the switches SW_{BF2}, and SW_{Bidir} are not conducting.

In the time period noted 32, which starts at T/2 and ends at T/2+kT, the switch SW_{Bidir} is conducting and the switches SW_{BF1} and SW_{BF2} are not conducting.

In the time period noted 33, which starts at T/2+kT and ends at T, the switch SW_{BF2} is conducting and the switches SW_{BF1} and SW_{Bidir} are not conducting.

For example, k is a positive value lower than 0.5.

For example, k=1/6.

According to the invention, the voltage across the capacitor C₂ is monitored and the duty cycle of the control signal of at least one of the switches SWHF3 and SWHF4 is controlled in order to reach a required voltage value at the end of the time periods 30, 31, 32 and 33.

At the end of the time period 30, the voltage of the capacitor C₂ is equal to null value..

At the end of the time period 31, the voltage of the capacitor C₂ is equal to null value.

At the end of the time period 32, the voltage of the capacitor C₂ is equal to V_{DC} value.

At the end of the time period 33, the voltage of the capacitor C₂ is equal to V_{DC} value.

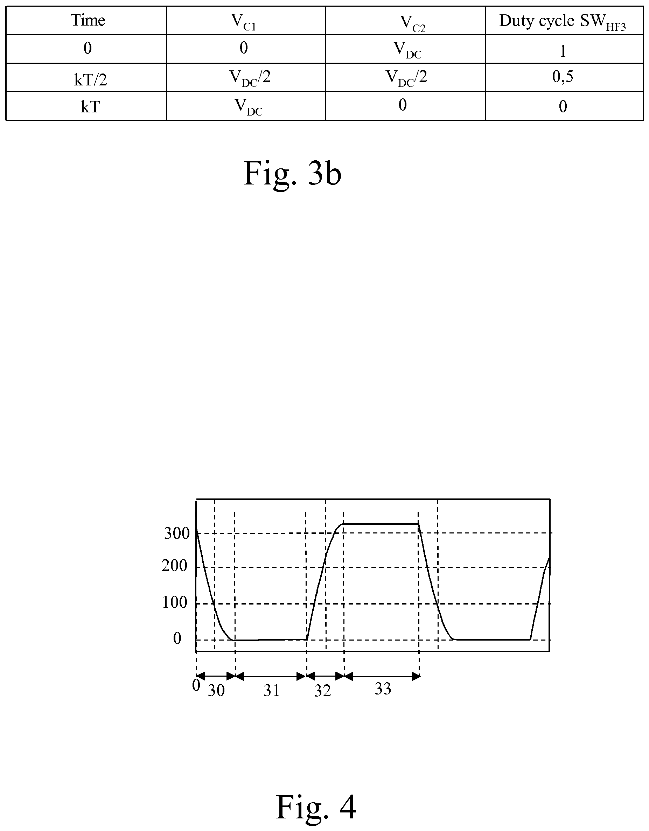

**Fig. 3b** is an example of duty cycle variations of a high frequency switch of the DC/AC inverter for setting the voltage of a capacitor of the DC/AC inverter to at least one given value prior to the end of time periods according to the present invention.

The Fig.3b shows an example wherein the voltage of the capacitor C₂ is brought to a null value during the time duration 30 of Fig. 3a.

At t=0, the voltage of the capacitor C₂ is equal to V_{DC} and the voltage of the capacitor C₁ is equal to null value. The duty cycle of the switch SW_{HF3} is equal to 1.

At t=kT/2, the voltage of the capacitor C₂ is equal to V_{DC}/2 and the voltage of the capacitor C₁ is equal to V_{DC}/2. The duty cycle of the switch SW_{HF3} is equal to 1/2.

At t=kT, the voltage of the capacitor C₂ is equal to null value and the voltage of the capacitor C₁ is equal to V_{DC}. The duty cycle of the switch SW_{HF3} is equal to 0.

The setting of the voltage of a capacitor of the C₂ may follow different shapes of curves like a half sine wave or a linear function.

**Fig. 4** is an example of the voltage on a capacitor of the DC/AC inverter which is controlled according to the present invention.

The Fig. 4 shows the voltage variations of the capacitor C₂.

At t=0, the voltage of the capacitor C₂ is equal to V_{DC} and the voltage of the capacitor C₁ is equal to null value. The voltage of the capacitor C₂ is equal to null value at the end of the first time period 30.

At t=kT/2, the voltage of the capacitor C₂ is equal to V_{DC}/2 and the voltage of the capacitor C₁ is equal to V_{DC}/2. The voltage of the capacitor C₂ is equal to null value at the end of the second time period 31.

At t=kT, the voltage of the capacitor C₂ is equal to null value and the voltage of the capacitor C₁ is equal to V_{DC}. The voltage of the capacitor C₂ is equal to V_{DC} at the end of the third time period 32.

The voltage of the capacitor C₂ is equal to V_{DC} at the end of the fourth time period 33.

The first to the fourth time periods are repeated at the same period as the period of the output current of the DC/AC inverter.

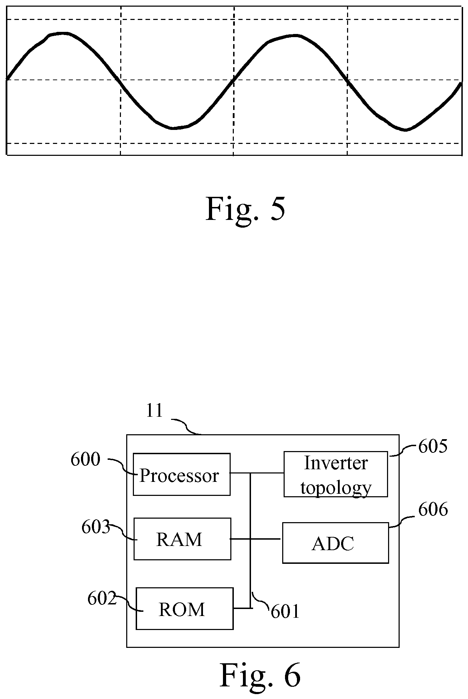

**Fig. 5** is an example of the output current of the DC/AC inverter according to the present invention.

The frequency of the sine wave is for example equal to 50Hz or 60Hz or 400Hz.

**Fig. 6** represents an example of a device comprising a DC/AC inverter topology in which the present invention is implemented.

The device 11 has, for example, an architecture based on components connected together by a bus 601 and a processor 600 controlled by a program. The program enables the control of the switches SW_{HF1}, SW_{HF2}, SW_{HF3}, SW_{HF4}, SWB_{F1} and SW_{BF2}, in order to provide a controlled output voltage of the DC-AC inverter 605 and to bring the voltage of the capacitor C₂ at a desired value at the end of time periods 30, 31, 32 and 33.

It has to be noted here that the device 11 is, in a variant, implemented under the form of one or several dedicated integrated circuits which execute the same operations as the one executed by the processor 200 as disclosed hereinafter.

The bus 601 links the processor 600 to a read only memory ROM 602, a random access memory RAM 603, an analog to digital converter ADC 606 and the DC-AC inverter as the one disclosed in Fig. 2.

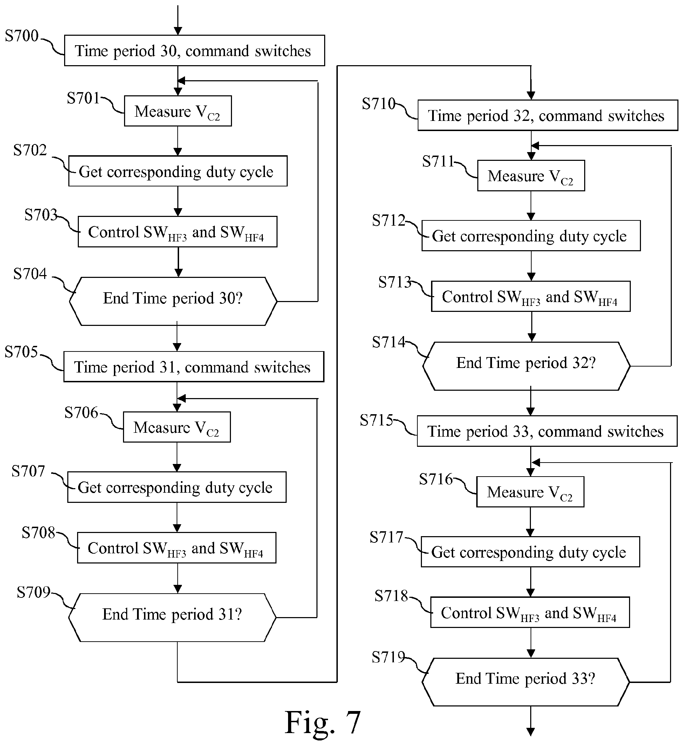

The read only memory ROM 602 contains instructions of the program as disclosed in Fig. 7, which are transferred, when the device 11 is powered on to the random access memory RAM 603.

The analog to digital converter 606 is connected to the DC-AC inverter 205 and converts voltage on capacitor C₂ into binary information.

**Fig. 7** represents an example of an algorithm executed by the DC/AC inverter in order to control the voltage of a capacitor of the DC/AC inverter.

The present algorithm is executed by the processor 600 continously.

At step S700, the processor 600 configures the DC/AC inverter by setting the switch SW_{Bidir} in a conducting state and the switches SW_{BF1} and SW_{BF2} in a non conducting state.

At next step S701, the processor 600 commands the ADC 606 in order to get a measurement of the voltage V_{C2} of the capacitor C₂.

At next step S702, the processor 600 reads a table stored in memory 603 and uses it in order to define a duty cycle which corresponds to the measured value and to the angle in the time period under process.

At next step S703, the processor 600 commands at least one of the switches SW_{HF3} and SW_{HF4} according to the read duty cycle.

At next step S704, the processor 600 checks if the time period 30 ends.

If the time period 30 ends, the processor 600 moves to step S705, otherwise, the processor 600 returns to step S701.

At step S705, the processor 600 configures the DC/AC inverter by setting the switches the switch SW_{BF1} in a conducting state and the switches SW_{BF2} and SW_{Bidir} in a non conducting state.

At next step S706, the processor 600 commands the ADC 606 in order to get a measurement of the voltage V_{C2} of the capacitor C₂.

At next step S707, the processor 600 reads a table stored in memory 603 and uses it in order to define a duty cycle which corresponds to the measured value and to the angle in the time period under process.

At next step S708, the processor 600 commands at least one of the switches SW_{HF3} and SW_{HF4} according to the read duty cycle.

At next step S709, the processor 600 checks if the time period 31 ends.

If the time period 31 ends, the processor 600 moves to step S710, otherwise, the processor 600 returns to step S706.

At step S710, the processor 600 configures the DC/AC inverter by setting the switch SW_{Bidir} in a conducting state and the switches SW_{BF1} and SW_{BF2} in a non conducting state.

At next step S711, the processor 600 commands the ADC 606 in order to get a measurement of the voltage V_{C2} of the capacitor C₂.

At next step S712, the processor 600 reads a table stored in memory 603 and uses it in order to define a duty cycle which corresponds to the measured value and to the angle in the time period under process.

At next step S713, the processor 600 commands at least one of the switches SW_{HF3} and SW_{HF4} according to the read duty cycle.

At next step S714, the processor 600 checks if the time period 32 ends.

If the time period 32 ends, the processor 600 moves to step S715, otherwise, the processor 600 returns to step S711.

At step S715, the processor 600 configures the DC/AC inverter by setting the switch SW_{BF2} in a conducting state and the switches SW_{BF1} and SW_{Bidir} in a non conducting state.

At next step S716, the processor 600 commands the ADC 606 in order to get a measurement of the voltage V_{C2} of the capacitor C₂.

At next step S717, the processor 600 reads a table stored in memory 603 and uses it in order to define a duty cycle which corresponds to the measured value and to the angle in the time period under process.

At next step S718, the processor 600 commands at least one of the switches SW_{HF3} and SW_{HF4} according to the read duty cycle.

At next step S719, the processor 600 checks if the time period 33 ends.

If the time period 33 ends, the processor 600 returns to step S700, otherwise, the processor 600 returns to step S716.

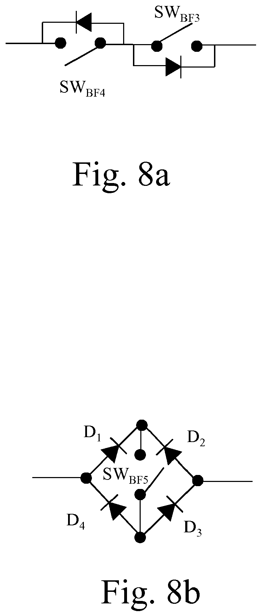

**Fig. 8a** is a first example of a bidirectional in voltage and in current switch.

The bidirectional switch SW_{Bidir} is composed of two switches SW_{BF4} and SW_{BF3}. One terminal of the switch SW_{BF3} is connected to the terminals of the first and second switches SW_{BF1} and SW_{BF2} which are interconnected together. The other terminal of the switch SW_{BF3} is connected to a terminal of the switch SW_{BF4}, the other terminal of the switch SW_{BF4} is connected to the first and the second capacitors C₁ and C₂ which are interconnected together.

**Fig. 8b** is a second example of a bidirectional in voltage and in current switch.

The bidirectional switch SW_{Bidir} is composed of a switch SW_{BF5} and four diodes D₁, D₂, D₃ and D₄, the anode of a first diode D₁ is connected to the first and the second capacitors C₁ and C₂ which are interconnected together, the cathode of the first diode D₁ is connected to the cathode of a second diode D₂ and to a terminal of the switch SW_{BF5}, the anode of the second diode D₂ is connected to the cathode of a third diode D₃ and to the terminals of the first and second switches SW_{BF1} and SW_{BF2} which are interconnected together, the anode of the third diode D₃ is connected to the other terminal of the switch SW_{BF5} and to the anode of a fourth diode D₄ and the cathode of the fourth diode D₄ is connected to the anode of the first diode D₁.

Naturally, many modifications can be made to the embodiments of the invention described above without departing from the scope of the present invention.

## Claims

1. A DC/AC inverter comprising a first and a second switches (SW_{BF1}, SW_{BF2}), **characterized in that** one terminal of each switch being connected to a respective input (21, 22) of the DC/AC inverter, the other terminals of the switches (SW_{BF1}, SW_{BF2}) being connected together and to one terminal of a third switch, the third switch being a bidirectional switch (SW_{Bidir}), the other terminal of the third switch being connected to a first and a second capacitors (C1, C2), one terminal of each capacitor being connected to a respective input of the DC/AC inverter, the other terminals of the capacitors being connected together, the bidirectional switch being conducting and the first and second switches being not conducting during a first time period, the first switch being conducting and the second switch, the bidirectional switch being not conducting during a second time period the bidirectional switch being conducting and the first and second switches being not conducting during a third time period, the second switch being conducting and the first switch, the bidirectional switch being not conducting during a fourth time period, the DC/AC inverter further comprising a fourth and a fifth switches (SW_{HF1}, SW_{HF2}), one terminal of each fourth and fifth switch being connected to a respective input of the DC/AC inverter, other terminals of the fourth and fifth switches being connected together and to one terminal of a first
inductor (L1), the other terminal of the first inductor being connected to a first output (23) of the DC/AC inverter and the second output of the DC/AC inverter (24) is connected to the terminals of the first and second switches which are connected together, wherein the DC/AC converter comprises means for setting the voltage of the second capacitor to at least one given value prior to the end of each time period, the given value is equal to null value prior to the end of the first and second time periods or the given value is equal to a voltage at the input of the DC/AC inverter prior to the end of the third and fourth time periods.

2. DC/AC inverter according to claim 1, **characterised in that** the means for setting the voltage of the second capacitor to at least one given value prior to the end of each time period is a DC/DC converter.

3. DC/AC inverter according to claim 2, **characterised in that** the DC/DC converter is a bidirectional buck converter composed of a second inductor (L2) and a sixth and seventh switches, one terminal of each sixth and seventh switches being connected to a respective input of the DC/AC inverter, the other terminals of the sixth and seventh switches being connected together and to one terminal of the second inductor (L2) the other terminal of the second inductor being connected to the terminals of the capacitors which are connected together.

4. DC/AC inverter according to any of the claims 1 to 3, **characterized in that** the first and third time periods have the same duration.

5. DC/AC inverter according to claim 4, **characterized in that** the second and fourth time periods have the same duration.

6. DC/AC inverter according to claim 5, **characterized in that** the sum of the durations of the first and third time periods is equal to the duration of the second time period.

7. DC/AC inverter according to any of the claims 1 to 6, **characterized in that** the bidirectional switch is composed of a eighth and a ninth switches, one terminal of the eighth switch being connected to the other terminals of the first and second switches, one other terminal of the eighth switch being connected to a terminal of the ninth switch, the other terminal of the ninth switch being connected to the first and the second capacitors.

8. DC/AC inverter according to any of the claims 1 to 6, **characterized in that** the bidirectional switch is composed of a eighth switch and four diodes, the anode of a first diode being connected to the first and the second capacitors, the cathode of the first diode being connected to the cathode of a second diode and to a terminal of the eighth switch, the anode of the second diode being connected to the cathode of a third diode and to the terminals of the first and second switches, the anode of the third diode being connected to the other terminal of the eighth switch and to the anode of a fourth diode and the cathode of the fourth diode being connected to the anode of the first diode.

## Patentansprüche

1. DC/AC-Wandler, der einen ersten und einen zweiten Schalter (SW_{BF1}, SW_{BF2}) umfasst, **dadurch gekennzeichnet, dass** ein Anschluss jedes Schalters mit einem jeweiligen Eingang (21, 22) des DC/AC-Wandlers verbunden ist, die anderen Anschlüsse der Schalter (SW_{BF1}, SW_{BF2}) miteinander und mit einem Anschluss eines dritten Schalters verbunden sind, wobei der dritte Schalter ein bidirektionaler Schalter (SW_{Bidir}) ist, wobei der andere Anschluss des dritten Schalters mit einem ersten und einem zweiten Kondensator (C1, C2) verbunden ist, wobei ein Anschluss jedes Kondensators mit einem jeweiligen Eingang des DC/AC-Wandlers verbunden ist, wobei die anderen Anschlüsse der Kondensatoren miteinander verbunden sind, wobei während einer ersten Zeitperiode der bidirektionale Schalter leitend ist und der erste und der zweite Schalter nichtleitend sind, während einer zweiten Zeitperiode der erste Schalter leitend ist und der zweite Schalter und der bidirektionale Schalter nichtleitend sind, während einer dritten Zeitperiode der bidirektionale Schalter leitend ist und der erste und der zweite Schalter nichtleitend sind und während einer vierten Zeitperiode der zweite Schalter leitend ist und der erste Schalter und der bidirektionale Schalter nichtleitend sind, wobei der DC/AC-Wandler weiterhin einen vierten und einen fünften Schalter (SW_{HF1}, SW_{HF2}) umfasst, wobei ein Anschluss jedes vierten und fünften Schalters mit einem jeweiligen Eingang des DC/AC-Wandlers verbunden ist, wobei andere Anschlüsse des vierten und des fünften Schalters miteinander und mit einem Anschluss einer ersten Induktivitätsspule (L1) verbunden ist, wobei der andere Anschluss der ersten Induktivitätsspule mit einem ersten Ausgang (23) des DC/AC-Wandlers verbunden ist und der zweite Ausgang des DC/AC-Wandlers (24) mit den Anschlüssen des ersten und des zweiten Schalters verbunden sind, die miteinander verbunden sind, wobei der DC/AC-Wandler Mittel zum Einstellen der Spannung des zweiten Kondensators auf wenigstens einen gegebenen Wert vor dem Ende jeder Zeitperiode umfasst, wobei der gegebene Wert vor dem Ende der ersten und der zweiten Zeitperiode gleich einem Null-Wert ist oder der gegebene Wert vor dem Ende der dritten und der vierten Zeitperiode gleich einer Spannung am Eingang des DC/AC-Wandler ist.

2. DC/AC-Wandler nach Anspruch 1, **dadurch gekennzeichnet, dass** das Mittel zum Einstellen der Spannung des zweiten Kondensators auf wenigstens einen gegebenen Wert vor dem Ende jeder Zeitperiode ein DC/DC-Wandler ist.

3. DC/AC-Wandler nach Anspruch 2, **dadurch gekennzeichnet, dass** der DC/DC-Wandler ein bidirektionaler Abwärtswandler ist, der aus einer zweiten Induktivitätsspule (L2) und einem sechsten und siebten Schalter besteht, wobei ein Anschluss jedes sechsten und siebten Schalters mit einem jeweiligen Eingang des DC/AC-Wandlers verbunden ist, wobei die anderen Anschlüsse des sechsten und des siebten Schalters miteinander und mit einem Anschluss der zweiten Induktivitätsspule (L2) verbunden sind, wobei der andere Anschluss der zweiten Induktivitätsspule mit den Anschlüssen der Kondensatoren verbunden sind, die miteinander verbunden sind.

4. DC/AC-Wandler nach einem der Ansprüche 1 bis 3, **dadurch gekennzeichnet, dass** die erste und die dritte Zeitperiode dieselben Dauern haben.

5. DC/AC-Wandler nach Anspruch 4, **dadurch gekennzeichnet, dass** die zweite und die vierte Zeitperiode dieselben Dauern haben.

6. DC/AC-Wandler nach Anspruch 5, **dadurch gekennzeichnet, dass** die Summe der Dauern der ersten und der dritten Zeitperiode gleich der Dauer der zweiten Zeitperiode ist.

7. DC/AC-Wandler nach einem der Ansprüche 1 bis 6, **dadurch gekennzeichnet, dass** der bidirektionale Schalter aus einem achten und einem neunten Schalter besteht, wobei ein Anschluss des achten Schalters mit den anderen Anschlüssen des ersten und des zweiten Schalters verbunden ist, wobei ein anderer Anschluss des achten Schalters mit einem Anschluss des neunten Schalters verbunden ist, wobei der andere Anschluss des neunten Schalters mit dem ersten und dem zweiten Kondensator verbunden ist.

8. DC/AC-Wandler nach einem der Ansprüche 1 bis 6, **dadurch gekennzeichnet, dass** der bidirektionale Schalter aus einem achten Schalter und vier Dioden besteht, wobei die Anode einer ersten Diode mit dem ersten und dem zweiten Kondensator verbunden ist, wobei die Kathode der ersten Diode mit der Kathode einer zweiten Diode und mit einem Anschluss des achtern Schalters verbunden ist, wobei die Anode der zweiten Diode mit der Kathode einer dritten Diode und mit den Anschlüssen des ersten und des zweiten Schalters verbunden ist, wobei die Anode der dritten Diode mit dem anderen Anschluss des achten Schalters und mit der Anode einer vierten Diode verbunden ist und wobei die Kathode der vierten Diode mit der Anode der ersten Diode verbunden ist.

## Revendications

1. Un inverseur DC/AC comprenant un premier et un second commutateurs (SW_{BF1}, SW_{BF2}), **caractérisé en ce que** l'une des bornes de chaque commutateur est connectée à une entrée respective (21, 22) de l'inverseur DC/AC, les autres bornes des commutateurs (SW_{BF1}, SW_{BF2}) étant connectées ensemble et à une borne d'un troisième commutateur, le troisième commutateur étant un commutateur bidirectionnel (SW_{Bidir}), l'autre borne du troisième commutateur étant connectée à des premier et second condensateurs (C1, C2), une borne de chaque condensateur étant connectée à une entrée respective de l'inverseur DC/AC, les autres bornes des condensateurs étant connectées ensemble, le commutateur bidirectionnel conduisant et les premier et second commutateurs ne conduisant pas pendant une première période de temps, le premier commutateur conduisant et le second commutateur, le commutateur bidirectionnel ne conduisant pas pendant une seconde période le commutateur bidirectionnel conduisant et les premier et second commutateurs ne conduisant pas pendant une troisième période de temps, le second conduisant et le premier commutateur, le commutateur bidirectionnel ne conduisant pas pendant une quatrième période de temps, l'inverseur DC/AC comprenant en outre un quatrième et un cinquième commutateurs (SW_{HF1}, SW_{HF2}), une borne de chaque quatrième et cinquième commutateur étant connectée à une entrée respective de l'inverseur DC/AC, d'autres bornes des quatrième et cinquième commutateurs étant connectées ensemble et à une borne d'une première inductance (L1), l'autre borne de la première inductance étant connectée à une première sortie (23) de l'inverseur DC/AC et la seconde sortie de l'inverseur DC/AC (24) est connectée aux bornes des premier et second commutateurs qui sont connectés ensemble, dans lequel le convertisseur DC/AC comprend des moyens pour régler la tension du deuxième condensateur à au moins une valeur donnée avant la fin de chaque période de temps, la valeur donnée est égale à la valeur nulle avant la fin des première et seconde périodes de temps ou la valeur donnée est égale à une tension à l'entrée du convertisseur DC/AC avant la fin des troisième et quatrième périodes de temps.

2. Inverseur DC/AC selon la revendication 1, **caractérisé en ce que** les moyens pour régler la tension du second condensateur à au moins une valeur donnée avant la fin de chaque période sont un convertisseur DC/DC.

3. Inverseur DC/AC selon la revendication 2, **caractérisé en ce que** l'inverseur DC/AC est un convertisseur abaisseur bidirectionnel composé d'une seconde inductance et d'un sixième et septième commutateurs, une borne de chaque sixième et septième commutateur étant connectée à une entrée respective de l'inverseur DC/AC, les autres bornes des sixième et septième commutateurs étant connectées ensemble et à une borne de la seconde inductance, l'autre borne de la seconde inductance étant connectée aux bornes des condensateurs qui sont connectées ensemble.

4. Inverseur DC/AC selon l'une quelconque des revendications 1 à 3, **caractérisé en ce que** les première et troisième périodes de temps ont la même durée.

5. Inverseur DC/AC selon la revendication 4, **caractérisé en ce que** les seconde et quatrième périodes de temps ont la même durée.

6. Inverseur DC/AC selon la revendication 5, **caractérisé en ce que** la somme des durées des première et troisième périodes de temps est égale à la durée de la seconde période de temps.

7. Inverseur DC/AC selon l'une quelconque des revendications 1 à 6, **caractérisé en ce que** le commutateur bidirectionnel est composé d'un huitième et d'un neuvième commutateurs, une borne du huitième commutateur étant connectée aux autres bornes des premier et second commutateurs. une autre borne du huitième commutateur étant connectée à une borne du neuvième commutateur, l'autre borne du neuvième commutateur étant connectée aux premier et second condensateurs.

8. Inverseur DC/AC selon l'une quelconque des revendications 1 à 6, **caractérisé en ce que** le commutateur bidirectionnel est composé d'un huitième commutateur et de quatre diodes, l'anode d'une première diode étant connectée aux premier et second condensateurs, la cathode de la première diode étant connectée à la cathode d'une seconde diode et à une borne du huitième commutateur, l'anode de la seconde diode étant connectée à la cathode d'une troisième diode et aux bornes des premier et second commutateurs, l'anode de la troisième diode étant connectée à l'autre borne du huitième commutateur et à l'anode d'une quatrième diode et la cathode de la quatrième diode étant connectée à l'anode de la première diode
